# EUROPÄISCHE PATENTSCHRIFT

(11) **EP 4 303 041 B1**
(45) Veröffentlichungstag und Bekanntmachung des Hinweises auf die Patenterteilung: **30.04.2025**
(21) Anmeldenummer: 23180870.0
(22) Anmeldetag: 22.06.2023
(51) Int. Cl.: B60G 7/00

(54) **DREIPUNKT-QUERLENKER**
THREE-POINT TRANSVERSE LINK
BARRE TRANSVERSALE À TROIS POINTS

(30) Priorität: 08.07.2022 DE 102022117069
(43) Veröffentlichungstag der Anmeldung: 10.01.2024
(73) Patentinhaber: Benteler Automobiltechnik GmbH, 33102 Paderborn (DE)
(72) Erfinder: Meyer, Stephan, 33605 Bielefeld (DE); Sanders, Michael, 33014 Bad Driburg (DE)
(74) Vertreter: Osterhoff, Utz

(56) Entgegenhaltungen:
- CN-A- 109 109 591
- DE-A1- 102007 018 569
- DE-A1- 102009 014 194
- DE-A1- 102010 016 730
- DE-A1- 102013 203 906
- DE-A1- 102013 213 038
- US-A- 5 310 210

## Beschreibung

Die vorliegende Erfindung betrifft einen Dreipunkt-Querlenker gemäß den Merkmalen im Oberbegriff von Anspruch 1.

In der Kraftfahrzeugtechnik werden Karosserien bzw. selbsttragende Karosserien verwendet. Die Räder werden über Lenker bzw. Querlenker an die Karosserien bzw. Achsen oder Achsträger angeschlossen.

Solche Lenker sind als Schalenbauteile bekannt, insbesondere als Blechumformbauteile aus einem Stahlwerkstoff.

Insbesondere sind auch Y-förmige Konfigurationen für Dreipunkt-Querlenker bekannt.

Ein Querlenker soll dabei möglichst verwindungssteif ausgebildet sein, um die Kinematik beim Ein- und Ausfedern des Rades optimal zu unterstützen.

Aus der DE 10 2013 203 906 A1 ist ein gattungsbildender Querlenker bekannt.

Aufgabe der vorliegenden Erfindung ist es, ein Querlenker aufzuzeigen, der in Bezug auf die Herstellungsvariante sowie auf die Möglichkeit der Anordnung in dem Kraftfahrzeug sowie der Beeinflussung des Einfederungs- und des Ausfederungsvorganges des Rades verbessert ist.

Die zuvor genannte Aufgabe wird mit einem Dreipunkt-Querlenker für ein Kraftfahrzeug mit den Merkmalen im Anspruch 1 gelöst.

Vorteilhafte Ausgestaltungsvarianten sind Gegenstand der abhängigen Ansprüche.

Der Dreipunkt-Querlenker für ein Kraftfahrzeug ist als einschaliges, insbesondere einstückig und werkstoffeinheitliches Blechumformbauteil hergestellt. Er besitzt einen Y-förmigen Grundkörper. Der Dreipunkt-Querlenker ist aus einem Stahlwerkstoff als Umformbauteil hergestellt. Bevorzugte Wandstärken sind zwischen 1 mm und 5 mm, insbesondere zwischen 3 mm und 4 mm, gewählt.

Der Dreipunkt-Querlenker weist drei Anbindungsstellen auf. Radträgerseitig ist eine Anbindungsstelle ausgebildet. Achsträgerseitig bzw. kraftfahrzeugseitig sind zwei Anbindungsstellen ausgebildet.

Erfindungsgemäß zeichnet der Querlenker nunmehr dadurch aus, dass jede Anbindungsstelle, also alle Anbindungsstellen, aus zwei sich gegenüberliegenden Kragenöffnungen zur Aufnahme eines jeweiligen Gummimetalllagers ausgebildet sind. Eine Kragenöffnung ist als Loch bzw. Öffnung, insbesondere runde Öffnung, ausgebildet, von der aus sich ein Kragen erstreckt. Die jeweiligen Aufnahmeöffnungen liegen sich bevorzugt parallel gegenüber. Die Kragen sind aufeinander zu zeigend orientiert. In die jeweiligen Kragenöffnungen werden dann Lager eingeführt, insbesondere eingepresst. Hierbei handelt es sich besonders bevorzugt um Gummimetalllager, insbesondere mit einer äußeren Langerhülse.

Erfindungsgemäß bietet der Querträger die Möglichkeit, dass als einschaliges und einstückiges und werkstoffeinheitliches Blechumformbauteil dieses besonders kostengünstig hergestellt werden kann. Gleichzeitig kann durch die Herstellung als Blechumformbauteil eine bereits optimierte Anpassung an vorgegebene Bauräume eingestellt werden. Dadurch, dass alle Anbindungsstellen einstückig und werkstoffeinheitlich ebenfalls mit hergestellt sind, fallen keine Koppeloperationen mit weiteren Anbauteilen, beispielsweise Kugelgelenken oder ähnlichem an. Dies spart Produktionskosten.

Ein weiterer erfindungsgemäßer Vorteil ist darin begründet, dass mindestens einer der Y-förmigen Arme über seinen Längsverlauf eine Verjüngung aufweist. Bevorzugt sind an beiden Y-förmigen Armen eine jeweilige Verjüngung ausgebildet. Die Verjüngung kann dabei als Reduzierung der geometrischen Querschnittsform und/oder Reduzierung der Querschnittsfläche ausgebildet sein. Die Verjüngung kann alternativ oder ergänzend als Aussparung mithin Materialabtrag ausgebildet sein. Die Aussparung ist insbesondere im Längsverlauf des Y-förmiges Arms als Wellenform ausgebildet. Hierdurch ergibt sich erfindungsgemäß der Vorteil, dass der Querträger an sich verwindungssteif ausgebildet ist als Blechumformbauteil, insbesondere mit einem C- oder U-förmigen Querschnitt des Grundkörpers bzw. der Arme. Gleichzeitig wird jedoch aufgrund der Verjüngung erreicht, dass die Verdrehsteifigkeit des Armes im Bereich der Anbindungsstelle reduziert wird. Besonders bevorzugt wird die Verdrehsteifigkeit auf einen Wert von < 10 Nm/Grad reduziert. Beim Ein- und Ausfederungsvorgang kann somit an den beiden Anbindungsstellen achsträgerseitig sichergestellt werden, dass der Querträger den Ein- und Ausfederungsvorgang selbst, aufgrund der verringerten Verdrehsteifigkeit bevorzugt unterstützt und nicht ein Gegenmoment, also ein Verklemmen oder ähnliches erzeugen würde.

Weiterhin besonders bevorzugt sind im Bereich des Grundkörpers selbst, also der radträgerseitigen Anbindung, nach außen orientierte Flansche abgebogen. Hierdurch wird die Steifigkeit des Lenkers, insbesondere eine laterale Steifigkeit des Lenkers besonders bevorzugt auf > 50 kN/mm erhöht.

Der Lenker ist somit in seiner Längsrichtung den Abstand der einzelnen Anbindungsstellen zueinander haltend. Während des Ein- und Ausfederungsvorganges, insbesondere bei zueinander in einem Winkel von 30 bis 70 Grad, genauer 35 bis 60 Grad und besonders bevorzugt von 40 bis 55 Grad angeordneten Lagerstellen der Y-förmigen Arme so ausgebildet, können sich die Y-förmigen Arme um ihre eigene Achse verdrehen, ohne die Steifigkeit des Lenkers zu beeinflussen.

Weitere Vorteile, Merkmale, Eigenschaft und Aspekte der vorliegenden Erfindung sind Gegenstand der nachfolgenden Beschreibung. Bevorzugte Ausgestaltungen werden in schematischen Figuren dargestellt. Diese dienen zum einfacheren Verständnis der Erfindung. Es zeigen:
- Figur 1: eine perspektivische Ansicht auf den erfindungsgemäße Querlenker,
- Figur 2: eine Unteransicht des Querlenkers,
- Figur 3: eine Rückansicht des Querlenkers,
- Figur 4: eine weitere perspektivische Ansicht,
- Figur 5: eine weitere perspektivische Ansicht,
- Figur 6: eine Draufsicht auf den erfindungsgemäßen Querlenker und
- Figur 7: Querschnittsansicht durch die Arme der Grundkörper.

In den Figuren werden für gleiche und ähnliche Bauteile dieselben Bezugszeichen verwendet, auch wenn eine wiederholte Beschreibung aus Vereinfachungsgründen entfällt.

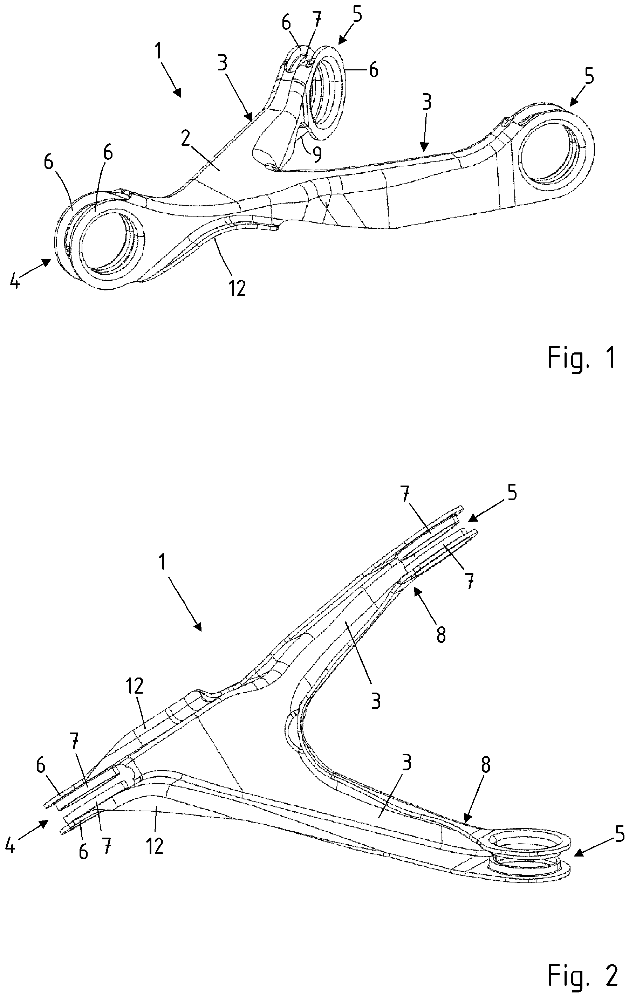

Figur 1 zeigt einen erfindungsgemäßen Dreipunkt-Querlenker 1. Der Querlenker 1 weist dazu einen Y-förmigen Grundkörper 2 auf. Von diesem Y-förmigen Grundkörper 2 stehen zwei Arme 3 ab, die auch als Y-förmige Arme bezeichnet werden. Jeweils an den Enden ist eine Anbindungsstelle ausgebildet. Eine radträgerseitige Anbindungsstelle 4 ist auf der Bildebene links gezeigt und zwei achsträgerseitige Anbindungsstellen 5 sind auf der Bildebene rechts dargestellt. Die Anbindungsstellen 5 selbst sind ausgebildet durch zwei sich gegenüberliegende Kragenöffnungen 6. Die Kragenöffnungen 6 selbst weisen wiederum nach innen gerichtete bzw. aufeinander zu zeigende Kragen 7 auf. Dies ist ebenfalls dargestellt in Figur 2, welche eine Unteransicht des Querlenkers gemäß Figur 1 darstellt. In die Kragenöffnung 6 wird ein jeweiliges nicht näher dargestelltes Lager eingepresst, insbesondere ein Gummimetalllager. Ein Vorteil ergibt sich in der Produktion, während die Kragen 7 als Durchzug hergestellt werden, kann gleichzeitig in dem Umformwerkzeug eine Kalibrierung stattfinden, so dass der Lenker nicht nur hergestellt, sondern gleichzeitig auch ein hohes Maß an Genauigkeit aufweist. In einem mehrstufigen Prozess kann das Umformwerkzeug auch als Folgeverbundwerkzeug oder mehrstufenpresswerkzeug ausgebildet sein und die Kalibrierung in einer der letzten bzw. der letzten Stufe stattfinden. Der Grundkörper und die Arme sind in ihrem Querschnitt jeweils C-förmig bzw. U-förmig ausgebildet.

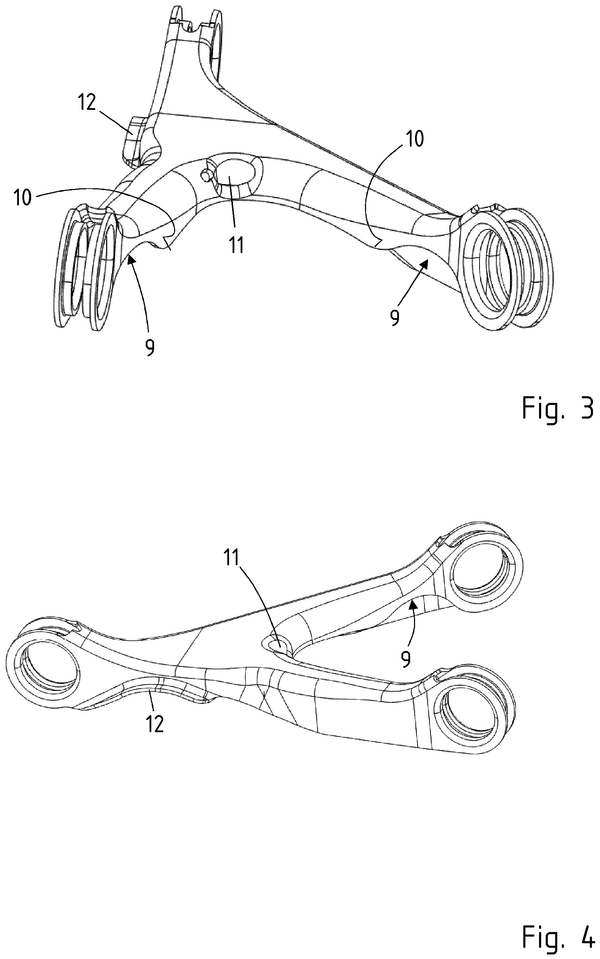

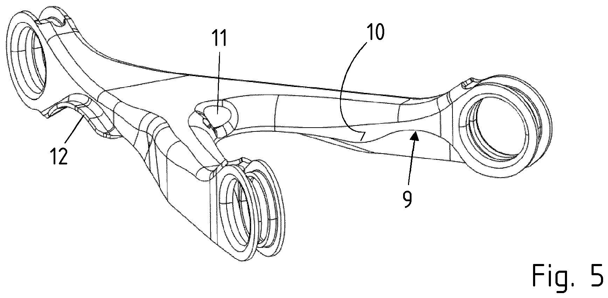

Ein weiterer wesentlicher Aspekt der Erfindung wird in Figur 2, jedoch auch insbesondere in Figuren 3, 4 und 5 dargestellt. Zur Richtung der Anbindungsstelle 4 weisen die Y-förmigen Arme 3 in Richtung der achsträgerseitigen Anbindungsstellen 5 eine Einschnürung 8 auf. Die Einschnürung 8 ist hier in Form einer Ausnehmung 9 des jeweils Y-förmigen Armes 3 ausgebildet. Hierdurch wird die Verdrehsteifigkeit im Bereich der achsträgerseitigen Anbindungsstellen 5 reduziert. Beim Ein- und Ausfederungsvorgang kann sich somit der jeweilige Y-förmige Arm 3 in der Ladungsstelle um die eigene Längsachse drehen, so dass der Querlenker 1 bei einem Ein- bzw. Ausfederungsvorgang keinen hierdurch bedingten erhöhten Biegewiderstand bietet.

Um diesen Effekt noch weiter zu unterstützen, ist ferner an der Y-Gabel des Grundkörpers 2 eine Einmuldung 11 ausgebildet. Aufgrund der Einmuldung 11 können sich die Y-förmigen Arme 3 beim Ein- bzw. Ausfederungsvorgang relativ zueinander bewegen.

Am radträgerseitigen Ende sind ferner nach außen orientierte abstehende Flansche 12 ausgebildet. Diese Flansche 12 versteifen die Anbindungsstelle 4 am radträgerseitigen Ende, so dass hier eine größere Steifigkeit im Bereich des Grundkörpers 2 ausgebildet ist. Insgesamt ergibt sich somit ein hinreichend steifer Dreipunkt-Querlenker 1, der einstückig und werkstoffeinheitlich hergestellt ist. Gleichzeitig bietet der Querträger 1 in sich eine Elastizität bzw. Duktilität, dass durch die Eigensteifigkeit gleichzeitig jedoch eine Duktilität bzw. Flexibilität des Querlenkers gegeben ist.

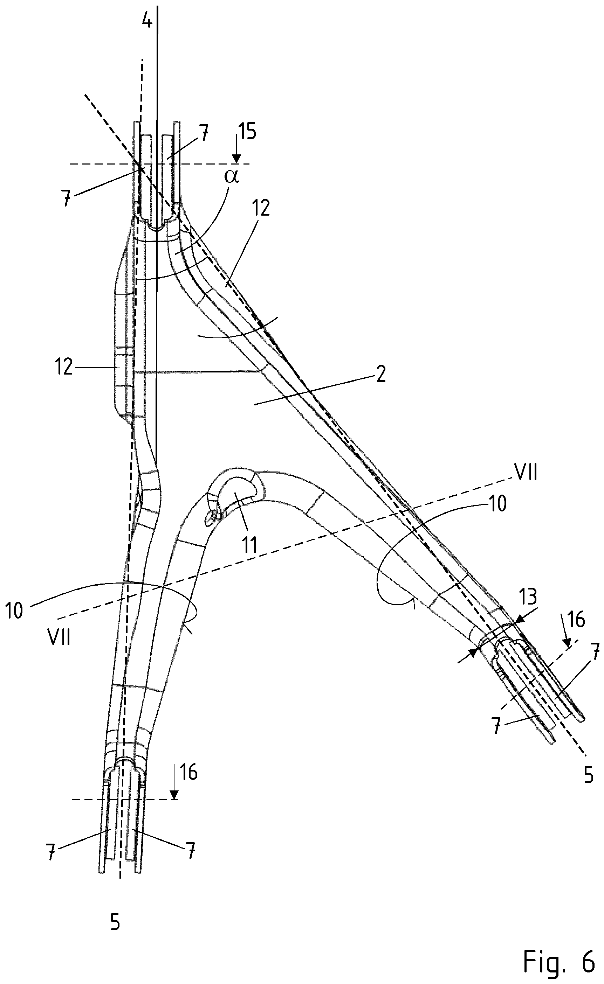

Figur 6 zeigt eine Draufsicht auf den erfindungsgemäßen Querlenker 1. Hieran ist zu erkennen, dass die beiden achsträgerseitigen Anbindungsstellen 5 in einem Winkel α zueinander angeordnet bzw. orientiert sind. Eine jeweilige Verlängerung der Mittellängsschnittebene zwischen den beiden Kragenöffnungen 6 stellt dabei die verlaufende Orientierung der Anbindungsstellen 4, 5 für die Lager dar.

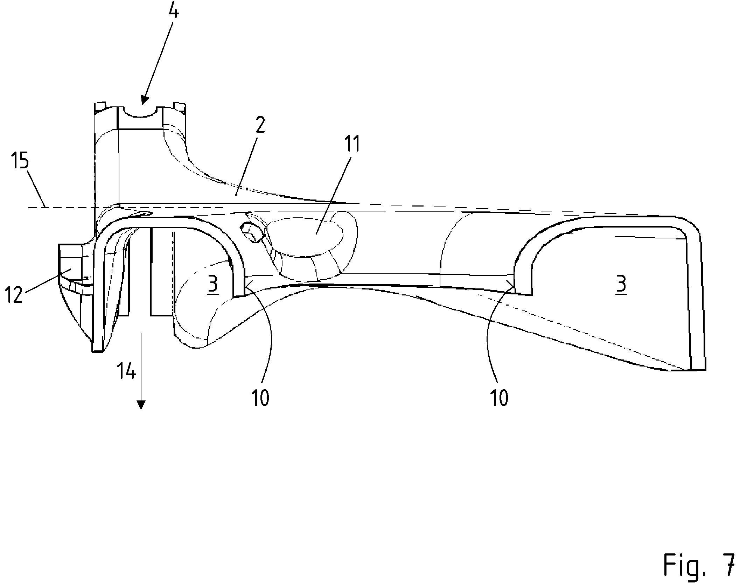

Figur 7 zeigt eine Querschnittsansicht gemäß der Schnittlinie VII-VII aus Figur 6. Eine Öffnungsrichtung 14 des Y-förmigen Grundkörpers 2 bzw. der Y-förmigen Arme 3 ist auf die Vertikalrichtung bezogen nach unten orientiert. Insbesondere ist der erfindungsgemäße Querlenker 1 als einseitig geöffnete Schale ausgebildet. Eine Öffnungsrichtung 14 ist bevorzugt derart angeordnet, dass sie quer zu einer Lagerachse verläuft, insbesondere quer zu allen Lagerachsen 15, 16. Weiterhin besonders bevorzugt können alle Lagerachsen 15, 16 der Anbindungsstellen in einer Ebene liegen. Ebenfalls zu erkennen ist der jeweils C-förmige Querschnitt der Arme. Im Gabelpunkt der beiden Arme ist ebenfalls die Einmuldung 11 zu erkennen. Die Einmuldung 11 ist in Richtung der Öffnung orientiert in den Grundkörper 2 eingeprägt.

### Bezugszeichen:

1 - Querlenker
2 - Y-förmiger Grundkörper
3 - Y-förmiger Arm
4 - radträgerseitige Anbindungsstelle
5 - achsträgerseitige Anbindungsstellen
6 - Kragenöffnung
7 - Kragen
8 - Einschnürung
9 - Ausnehmung
10 - innenseitiger Schenkel
11 - Einmuldung
12 - Flansch
13 - Verjüngung
14 - Öffnungsrichtung
15 - Lagerachse zu 4
16 - Lagerachse zu 5

## Patentansprüche

1. Dreipunkt-Querlenker (1) für ein Kraftfahrzeug, hergestellt als einschaliges Blechumformbauteil mit einem Y-förmigen Grundkörper (2), wobei radträgerseitig eine Anbindungsstelle (4) ausgebildet ist und achsträgerseitig zwei Anbindungsstellen (5) ausgebildet sind, **dadurch gekennzeichnet, dass** alle Anbindungsstellen (4, 5) aus zwei sich gegenüberliegenden Kragenöffnungen (6) zur Aufnahme eines jeweiligen Gummimetalllagers ausgebildet sind und dass mindestens einer der Y-förmigen Arme (3) eine Verjüngung (13) aufweist und/oder dass an einer Gabelstelle der Y-förmigen Arme (3) eine nach innen gerichtete muldenförmige Vertiefung (11) ausgebildet ist.

2. Querlenker (1) nach Anspruch 1, **dadurch gekennzeichnet, dass** die Verjüngung eine Reduzierung der geometrischen Querschnittsform und/oder der Querschnittsfläche ist.

3. Querlenker (1) nach einem der vorangehenden Ansprüche, **dadurch gekennzeichnet, dass** die Verjüngung als Aussparung, insbesondere an einer Innenseite des Y-förmigen Armes (3) ausgebildet ist.

4. Querlenker (1) nach einem der vorangehenden Ansprüche, **dadurch gekennzeichnet, dass** der Grundkörper (2) als Schale ausgebildet ist und insbesondere die Schale zu einer Seite hin geöffnet ist, wobei eine Öffnungsrichtung quer zu den Lagerachsen aller Anbindungsstellen (4, 5) und/oder quer zur Axialrichtung aller y-förmigen Arme (3) verläuft.

5. Querlenker (1) nach einem der vorangehenden Ansprüche, **dadurch gekennzeichnet, dass** der Grundkörper (2) und/oder die Y-förmigen Arme (3) in ihrem Querschnitt U-förmig oder C-förmig ausgebildet sind.

6. Querlenker (1) nach einem der vorangehenden Ansprüche, **dadurch gekennzeichnet, dass** die Kragen (7) der Kragenöffnungen (6) einer Anbindungsstelle, bevorzugt aller Anbindungsstellen, aufeinander zu zeigend ausgebildet sind.

7. Querlenker (1) nach einem der vorangehenden Ansprüche, **dadurch gekennzeichnet, dass** im Bereich der radträgerseitigen Anbindungsstelle (4) nach außen gerichtete Flansche (12) am Grundkörper (2) ausgebildet sind.

8. Querlenker (1) nach einem der vorangehenden Ansprüche, **dadurch gekennzeichnet, dass** in Draufsicht die achsträgerseitigen Anbindungsstellen (5) in einem Winkel (α) von 30 bis 70 Grad, bevorzugt von 35 bis 60 Grad und insbesondere von 40 bis 55 Grad zueinander angeordnet verlaufen.

9. Querlenker (1) nach einem der vorangehenden Ansprüche, **dadurch gekennzeichnet, dass** alle Lagerachsen (15, 16) der Anbindungsstellen (4, 5) in einer Ebene liegen.

## Claims

1. A three-point transverse link (1) for a motor vehicle, manufactured as a single-shell sheet metal shaped component with a Y-shaped base body (2), wherein one connection point (4) is formed on the wheel carrier and two connection points (5) are formed on the axle carrier, **characterised in that** all connection points (4, 5) are formed from two opposing collar openings (6) for receiving a respective rubber-metal bearing and **in that** at least one of the Y-shaped arms (3) has a tapered portion (13) and/or **in that** an inwardly directed trough-shaped depression (11) is formed at a fork point of the Y-shaped arms (3).

2. The transverse link (1) according to claim 1, **characterised in that** the tapered portion is a reduction of the geometric cross-sectional shape and/or the cross-sectional area.

3. The transverse link (1) according to any one of the preceding claims, **characterised in that** the tapered portion is formed as a recess, in particular on an inner side of the Y-shaped arm (3).

4. The transverse link (1) according to any one of the preceding claims, **characterised in that** the base body (2) is formed as a shell and in particular the shell is open to one side, wherein an opening direction runs transversely to the bearing axes of all connection points (4, 5) and/or transversely to the axial direction of all Y-shaped arms (3).

5. The transverse link (1) according to any one of the preceding claims, **characterised in that** the base body (2) and/or the Y-shaped arms (3) are U-shaped or C-shaped in their cross section.

6. The transverse link (1) according to any one of the preceding claims, **characterised in that** the collars (7) of the collar openings (6) of a connection point, preferably of all connection points, are formed to point towards one another.

7. The transverse link (1) according to any one of the preceding claims, **characterised in that** outwardly directed flanges (12) are formed on the base body (2) in the region of the connection point (4) on the wheel carrier.

8. The transverse link (1) according to any one of the preceding claims, **characterised in that**, in plan view, the connection points (5) on the axle carrier are arranged at an angle (a) of 30 to 70 degrees, preferably of 35 to 60 degrees and in particular of 40 to 55 degrees to one another.

9. The transverse link (1) according to any one of the preceding claims, **characterised in that** all bearing axes (15, 16) of the connection points (4, 5) lie in one plane.

## Revendications

1. Bras oscillant transversal (1) à trois points pour un véhicule automobile, fabriqué en tant que composant de formage en tôle monocoque avec un corps de base en forme de Y (2), un point de liaison (4) étant formé côté support de roue et deux points de liaison (5) sont formés côté support d'essieu, **caractérisé en ce que** tous les points de liaison (4, 5) sont formés de deux ouvertures de collet (6) opposées servant à recevoir un palier respectif en caoutchouc et en métal et **en ce qu'**au moins l'un des bras en forme de Y (3) présente un rétrécissement (13) et/ou **en ce qu'**un évidement (11) en forme d'auge orienté vers l'intérieur est formé en un point de fourche des bras en forme de Y (3).

2. Bras oscillant transversal (1) selon la revendication 1, **caractérisé en ce que** le rétrécissement est une réduction de la forme géométrique de la section transversale et/ou de la surface de la section.

3. Bras oscillant transversal (1) selon l'une quelconque des revendications précédentes, **caractérisé en ce que** le rétrécissement est formé en tant qu'évidement, en particulier au niveau d'un côté intérieur du bras en forme de Y (3).

4. Bras oscillant transversal (1) selon l'une quelconque des revendications précédentes, **caractérisé en ce que** le corps de base (2) est conçu en tant que coque et en particulier la coque est ouverte vers un côté, dans lequel une direction d'ouverture s'étend transversalement aux axes de palier de tous les points de liaison (4, 5) et/ou transversalement à la direction axiale de tous les bras en forme de Y (3).

5. Bras oscillant transversal (1) selon l'une quelconque des revendications précédentes, **caractérisé en ce que** le corps de base (2) et/ou les bras en forme de Y (3) sont formés en U ou en C dans leur section transversale.

6. Bras oscillant transversal (1) selon l'une quelconque des revendications précédentes, **caractérisé en ce que** les collets (7) des ouvertures de collet (6) d'un point de liaison, de préférence de tous les points de liaison, sont formés de manière à être orientés les uns vers les autres.

7. Bras oscillant transversal (1) selon l'une quelconque des revendications précédentes, **caractérisé en ce que** des brides (12) orientées vers l'extérieur dans la zone du point de liaison (4) côté support de roue sont formées au niveau du corps de base (2).

8. Bras oscillant transversal (1) selon l'une quelconque des revendications précédentes, **caractérisé en ce qu'**en vue en élévation, les points de liaison (5) côté support d'essieu s'étendent disposés les uns par rapport aux autres selon un angle (a) de 30 à 70 degrés, de préférence de 35 à 60 degrés et en particulier de 40 à 55 degrés.

9. Bras oscillant transversal (1) selon l'une quelconque des revendications précédentes, **caractérisé en ce que** tous les axes de palier (15, 16) des points de liaison (4, 5) se trouvent dans un plan.
